(19) Europäisches Patentamt
European Patent Office
Office européen des brevets

(11) Veröffentlichungsnummer: **0 108 230**
**A1**

(12) # EUROPÄISCHE PATENTANMELDUNG

(21) Anmeldenummer: 83109430.5

(22) Anmeldetag: 22.09.83

(51) Int. Cl.³: **A 01 K 31/04**

(30) Priorität: 30.10.82 DE 3240346

(43) Veröffentlichungstag der Anmeldung: 16.05.84 Patentblatt 84/20

(84) Benannte Vertragsstaaten: DE FR GB IT NL

(71) Anmelder: Hans Giesbert GmbH & Co. KG
Steinbruch 5
D-8755 Alzenau(DE)

(72) Erfinder: Sauer, Walter
Leiderer Stadtweg
D-8750 Aschaffenburg(DE)

(72) Erfinder: Heymanns, Klaus
Geisenbergstrasse 4
D-8752 Laufach 2(DE)

(74) Vertreter: Dahlmann, Gerhard, Dipl.-Ing.
Am Feldrain 20
D-6940 Weinheim(DE)

(54) **Käfigbatterie für Federvieh.**

(57) Für die Trocknung von Hühnerkot bei Käfigbatterien wird eine Einrichtung zur Zufuhr von Luft vorgeschlagen, bei der ein Luftverteilernetz Verwendung findet.

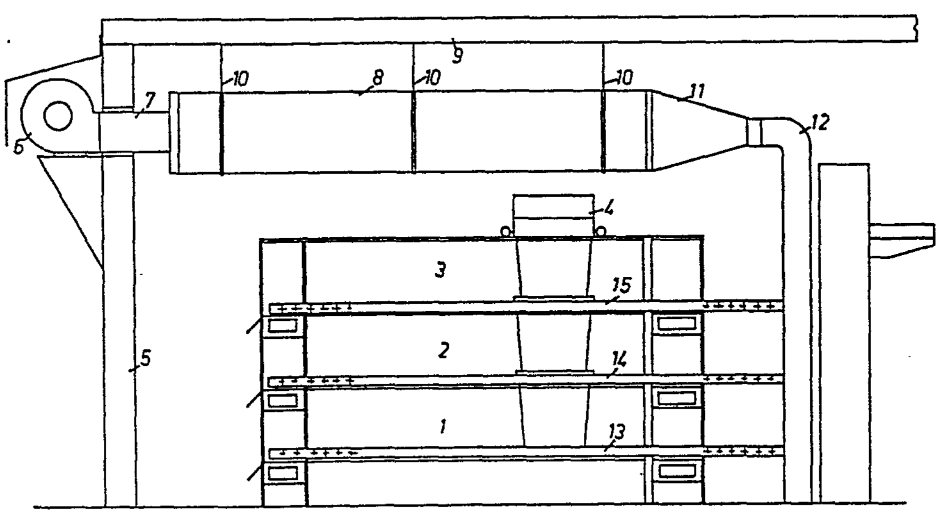


FIG. 1

EP 0 108 230 A1

 0108230

Hans Giesbert GmbH & Co. KG
Steinbruch 5
8755 Alzenau

# Käfigbatterie für Federvieh

Die Erfindung betrifft eine Käfigbatterie für Federvieh mit einer Einrichtung zur Zufuhr von Luft zur Kottrocknung, die ein Gebläse für die Frischluft und ein aus Förderrohren bestehendes Luftverteilernetz hat.

Bei der Tierhaltung von Kleintieren, insbesondere in Käfigbatterien, stellt die Entfernung des anfallenden Kots beträchtliche Probleme dar. Frischer Hühnerkot hat normalerweise 2o bis 22 % Trockensubstanz. Der Rest ist Wasser. Dieser Kot ist sehr schwierig auszubringen, schlecht lagerfähig und auch als Dünger auf dem Feld schlecht zu verteilen. Durch den hohen Wasseranteil des Kots entsteht im Stall schlechte Luft und zur Lüftung der Ställe sind besonders große Luftmengen erforderlich. Dies hat wieder eine Unterkühlung der Ställe im Winter zur Folge, wodurch ein höherer Futterverbrauch gegeben ist.

/2/

Aus obigen Gründen wurde versucht, durch eine gleichmäßige Belüftung der Käfigetagen den Kot zu rocknen. Die dabei erzielten Ergebnisse waren jedoch nicht zufriedenstellend.

Der Erfindung liegt deshalb die Aufgabe zugrunde, mit möglichst einfachen und kostengünstigen Mitteln eine Kottrocknung zu erreichen.

Die Lösung der gestellten Aufgabe wird bei einer Käfigbatterie der eingangs genannten Gattung erfindungsgemäß dadurch erreicht, daß das Verteilernetz einen Wärmetauscher aufweist und entlang der Kotbänder oder Kotauflagen geführte Blasrohre hat, die in vorbestimmten Abständen mit auf den Kot gerichteten Luftaustrittsöffnungen oder Austrittsdüsen versehen sind. Durch die Fördervorrichtung wird die Frischluft angesaugt und in die Förderrohre übergeführt. Die Förderrohre verteilen die Luft auf die Kotbänder, wobei zuvor eine Erwärmung gegebenenfalls auch eine Abkühlung der Luft stattfindet, damit die Temperatur im Stall nicht verändert wird.

Als Fördervorrichtung wird zweckmäßigerweise ein entsprechend ausgelegtes Gebläse verwendet. Die Förderrohre selbst werden aus Kunststoffprofilen und/oder aus Plastikschläuchen gebildet. Die Herstellung entsprechender Förderrohrlängen bzw. Profile kann dadurch sehr einfach ausgeführt werden.

In der bevorzugten Ausführungsform wird das Luftverteilernetz aus einem Hauptrohr mit großem Durchmesser, wenigstens einem daran anschließenden Abzweigrohr und mehreren, jeweils von einem Abzweigrohr ausgehenden, entlang der Kotbänder geführter Blasrohre gebildet. Das Hauptrohr ist in seinem Durchmesser so gewählt, daß die Aufenthaltsdauer der Luft im Hauptrohr ausreicht, um die Luft etwa auf die Stalltemperatur zu erwärmen. Das Hauptrohr stellt somit den Wärmetauscher für die Erwärmung der Luft dar.

/3/

28.10.1982
Akte 116-23

Die Abzweigrohre haben einen kleineren Durchmesser als das Hauptrohr und führen die Luft zu den einzelnen Blasrohren. Letztere gehen von den Abzweigrohren aus. Sie sind in vorbestimmten Abständen mit auf den Kot gerichteten Luftaustrittsöffnungen versehen. Diese Luftaustrittsöffnungen haben einen Durchmesser von etwa 3mm. Die Blasrohre dagegen haben einen Durchmesser, der in der Größenordnung von etwa 8cm liegt. Diese Abmessungen sind für die Wirkungsweise der Erfindung nicht allein ausschlaggebend. Von Bedeutung ist vielmehr eine richtige Dimensionierung der in den Blasrohren vorhandenen Luftmenge, so daß die austretende Luft keinen allzu starken Strahl bildet und sich damit störend auswirkt.

Um die Luft in der günstigsten Weise den Kotbändern zuzuführen, können die Blasrohre in vorbestimmten Abständen mit angefügten Austrittsdüsen versehen sein, die die Luft direkt dem Kotband zuleiten.

Nach einer anderen Ausführungsform der Erfindung kann parallel zu jedem Blasrohr ein Hilfsblasrohr angeordnet sein, das die Luftaustrittsöffnungen hat und über Anschlußstutzen mit dem Blasrohr verbunden ist. Das Blasrohr selbst hat dann keine eigenen Luftaustrittsöffnungen oder Austrittsdüsen.

Das Hauptrohr wurde zweckmäßigerweise oberhalb und längs der Käfigbatterie angeordnet. Vorzugsweise erstreckt es sich über die gesamte Käfigbatterie und ist so dimensioniert, daß die gewünschte Erwärmung der Frischluft auf Stalltemperatur durch die Aufenthaltsdauer der Luft in dem Hauptrohr erreicht wird.

28.10.1982
Akte 116-23

Das bzw. die Abzweigrohre können dann an der Stirnwand der Käfigbatterie angebracht sein. Die Blasrohre gehen von den Abzweigrohren aus und sind an der Käfigfront entlang geführt. Je nach Art der Käfigbatterien und des vorhandenen Platzes für die Unterbringung der Blasrohre können verschiedene Ausführungsformen und Anordnungsweisen für die Blasrohre gewählt werden. So können die Blasrohre beispielsweise unterhalb der an der Käfigfront verlaufenden Kotabweisbleche angeordnet sein. Möglich ist auch die Anordnung der Blasrohre zwischen den Kotabweisblechen und den Futterrinnen. Bei den beiden genannten Ausführungsformen ist die Verwendung von Profilrohren günstig und die nach innen gerichtete Oberfläche der Blasrohre kann so ausgebildet sein, daß sie die Kotabweisfläche bildet. Die bisher vorhandenen Kotabweisbleche können dann entfallen.

Weiterhin ist es möglich, die Blasrohre im Käfigraum an dessen Vorderfront unterhalb des Bodengitters des Käfigbodens anzuordnen. Bei ausreichendem Platz ist dies eine besonders einfache Ausführungsform.

Die Anbringung der Kottrocknung ist nicht nur bei neuen Käfigbatterien möglich, sondern auch bei bereits vorhandenen Käfigbatterien kann das Luftverteilernetz untergebracht werden. Hierfür bietet sich eine Anordnung der Blasrohre an der Vorderfront der Käfigbatterie an, außerhalb der Käfigständer und bei Legebatterien unterhalb des Eiablagebodens. Bei dieser Anordnung der Blasrohre ist es vorteilhaft, wenn die Blasrohre mit Austrittsdüsen versehen sind, die in den Käfigraum, unterhalb des jeweiligen Käfigbodens geführt sind und schräg nach unten gerichtet Austrittsöffnungen haben, also daß die austretende Luft direkt auf den Kot gerichtet wird.

28.10.1982
Akte 116-23

Bei der voranstehend geschilderten Anordnung der Blasrohre an der Vorderfront der Käfigbatterie können auch die Hilfsblasrohre sehr günstig verwendet werden, indem letztere im Käfigraum unterhalb der jeweiligen Käfigböden angeordnet sind.

Anhand mehrerer Ausführungsbeispiele wird die Erfindung nachstehend näher erläutert.

Es zeigen:

Fig. 1 einen Längsschnitt durch eine Bandbatterie in schematisierter Ausführungsform;

Fig. 2 die Bandbatterie nach Fig. 1 im Querschnitt;

Fig. 3 einen Schnitt durch ein Blasrohr an der Vorderfront eines Käfigs;

Fig. 4 einen Schnitt durch ein Blasrohr mit Kotabweisung neben der Futterrinne;

Fig. 5 ein Blasrohr außerhalb der Käfigfront mit Austrittsdüse" im Schnitt;

Fig. 6 ein Blasrohr außerhalb der Käfigfront mit Hilfsblasrohr im Schnitt;

Fig. 7 einen Schnitt durch ein Blasrohr im Käfigraum unterhalb des Bodengitters.

Die in Fig. 1 gezeigte Käfigbatterie ist eine an sich übliche Bauweise und besteht aus drei Etagen, 1,2 und 3. Mit 4 ist der verschiebbare Futterwagen angedeutet. Am Gebäude 5 ist in der links sichbaren Seitenwand ein Gebläse 6 befestigt. Über das durch die Mauer des Gebäudes geführte Verbindungsstück 7 wird die durch das Gebläse angesaugte Frischluft in das Hauptrohr 8 gedrückt. Das Hauptrohr 8 ist an der Decke 9 des Ge-

28.10.1982
Akte 116-23

bäudes über die Halterungen 10 befestigt. Über die Tülle 11 wird die im Hauptrohr 8 bereits erwärmte Luft dem Abzweigrohr 12 zugeführt. An das Abzweigrohr 12 schließen die Blasrohre 13, 14 und 15 an. Die Blasrohre 13 bis 15 sind entlang der nicht näher eingezeichneten Kotbänder geführt.und zwar über die ganze Länge des Käfigs. In vorbestimmten Abständen haben sie im Bereich der Kotbänder ihre Luftaustrittsöffnungen.

Das Hauptrohr 8 mit dem Abzweigrohr 12 und den Blasrohren 13 bis 15 bilden die wesentlichen Teile des Luftverteilernetzes. Im Ausführungsbeispiel der Fig. 1 und 2 sind sowohl Hauptrohr 8 als auch Abzweigrohr 12 und Blasrohre 13 bis 15 aus runden Plastikschläuchen gebildet. An den Verbindungsstellen sind die Rohre miteinander verschweißt.

In der Fig. 2 ist die Käfigbatterie nach der Fig. 1 im Querschnitt gezeigt. Das Hauptrohr 8 leitet die Luft über in das Abzweigrohr 12 und von dort werden die Blasrohre 13 bis 15 auf jeder Seite der Batterie entlanggeführt. Die Luftaustrittsöffnungen der Blasrohre 13 bis 15 sind in das Innere der Batterie auf den Kot 16 gerichtet.

In der Fig. 3 ist vergrößert im Querschnitt ein Blasrohr 17 gezeigt, das im Querschnitt gesehen etwa die Form eines Dreiecks hat. Dieses Blasrohr ist besonders günstig bei Käfigen mit Außenständer 18 anzuordnen. Die Kotabweisbleche können entfallen, da die Kotabweisung durch die nach innen gerichtete Oberfläche 19 des Blasrohres 17 erfüllt werden kann. Das Blasrohr 17 hat an seiner nach unten gerichteten Seite 20 Luftaustrittsöffnungen 21 durch die die Luft wie durch die gestrichelt eingezeichneten Strahlen angedeutet auf den Kot 16 gerichtet wird.

Die Fig. 4 zeigt ebenfalls im Querschnitt die Anordnung eines Blasrohres 22 an der Vorderfront eines Käfigs mit Ständer in Batteriemitte. Hier ist das Blasrohr 22 ebenfalls mit einer Oberfläche 23 versehen, die die Kotabweisfläche bildet. Die außen liegende Oberfläche 24 des Blasrohres 22 liegt an der Futterrinne 25 an. Auf seiner Unterseite hat das Blasrohr 22 Luftaustrittsöffnungen 21 durch die die Trockenluft wie durch die Strahlen angezeigt, auf den Kot 16 geblasen wird.

Die Fig. 5 zeigt im entsprechenden Querschnitt ein Blasrohr 26 von runder Form, das anstelle der Luftaustrittsöffnunen mit Austrittsdüsen 27 versehen ist. Das Blasrohr 26 ist außerhalb des Käfigständers 18 angeordnet und die Austrittsdüsen 27 sind in den Käfigraum 28 geführt, unterhalb des Käfigbodens 29, so daß die Luft auf die gesamte Oberfläche des Kots 16 verteilt werden kann. Hierfür sind auch die Austrittsöffnungen 30 der Austrittsdüsen 27 schräg nach unten gerichtet.

In der Fig. 6 hat das Blasrohr 31, ebenfalls im Querschnitt gesehen eine runde Form und ist in gleicher Weise wie bei Fig. 5 außerhalb des Ständers 18 und unterhalb des Eiablagebodens 32 angeordnet. Parallel zum Blasrohr 31 verläuft ein Hilfsblasrohr 33, das im Käfigraum 28 liegt. Das Hilfsblasrohr 33 ist über den Anschlußstutzen 34 mit dem Blasrohr 31 verbunden. Die Trockenluft wird aus dem Hilfsblasrohr 33 über eine Öffnung 21 auf den Kot 16 geleitet. Das Hilfsblasrohr liegt ebenfalls unterhalb des Käfigbodens 29.

Die Fig. 7 stellt schließlich eine Ausführungsform im Querschnitt dar, die besonders einfach ist. Hier wird das Blasrohr 35 selbst im Käfigraum 28 unterhalb des Bodengitters des Käfigbodens 29 an der Vorderfront des Käfigs angeordnet. Im Beispiel ist das Blasrohr 35 ein Profilrohr, das an seiner oberen und

28.10.1982
Akte 116-23

innen liegenden Kante eine auf den Kot gerichtete Austrittsöffnung 21 hat. Es ist selbstverständlich auch möglich, je ein rundes Blasrohr anzuordnen, jedoch stellt in diesem Fall das Profilrohr eine besonders günstige Lösung dar.

Die geizeigten Ausführungsbeispiele legen dar, daß bei allen Ausführungsformen die Blasrohre an der Vorderfront der Käfige angeordnet sind, und daß damit den auf jeder Käfighälfte liegenden Kotbändern bzw. deren Hälften ein Blasrohr zugeordnet ist. Dadurch wird eine besonders gute Trockenwirkung erreicht.

Bei Käfigbatterien großer Länge, z. B. über 45cm, ist es günstig, das Gebläse zum Hauptrohr so anzuordnen, daß die Frischluft in der Mitte des Hauptrohres eintritt. Die Luft wird dann auf die linke und auf die rechte Seite des Hauptrohres verteilt und gelangt an dessen Enden in jeweils eines oder mehrere Abzweigrohre. Von den Abzweigrohren gehen dann die Blasrohre aus, die in der Mitte der Batterie enden.

- 9 -

# ANSPRÜCHE

1. Käfigbatterie für Federvieh mit einer Einrichtung zur Zufuhr von Luft zur Kottrocknung, die ein Gebläse für die Frischluft und ein aus Förderrohren bestehendes Luftverteilernetz hat, dadurch gekennzeichnet, daß das Verteilernetz einen Wärmetauscher aufweist, und entlang der Kotbänder oder Kotauflagen geführte Blasrohre (13, 14, 15) hat, die in vorbestimmten Abständen mit auf den Kot gerichteten Luftaustrittsöffnungen (21) oder Austrittsdüsen (27) versehen sind.

2. Käfigbatterie nach Anspruch 1, dadurch gekennzeichnet, daß die Förderrohre aus Kunststoffprofilen und/oder aus Plastikschläuchen gebildet sind.

3. Käfigbatterie nach Anspruch 1 oder 2, dadurch gekennzeichnet, daß das Luftverteilernetz aus einem Hauptrohr (8) mit großem Durchmesser, wenigstens einem daran anschließenden Abzweigrohr (12) und mehreren, jeweils von einem Abzweigrohr (12) ausgehenden, entlang der Kotbänder oder Kotauflagen geführten Blasrohren (13, 14, 15) besteht.

4. Käfigbatterie nach einem der Ansprüche 1 bis 3, dadurch gekennzeichnet, daß die Luftaustrittsöffnungen (21) einen Durchmesser von 3 mm haben.

5. Käfigbatterie nach den Ansprüche 1 bis 4, dadurch gekennzeichnet, daß parallel zu jedem Blasrohr (31) ein Hilfsblasrohr (33) angeordnet ist, das über Anschlußstutzen (34) mit dem Blasrohr verbunden ist und das Lufaustrittsöffnungen (21) hat.

6. Käfigbatterie nach einem der Ansprüche 1 bis 5, dadurch gekennzeichnet, daß das Hauptrohr (8) oberhalb und längs der Käfigbatterie angeordnet ist.

7. Käfigbatterie nach einem der Ansprüche 1 bis 6, dadurch gekennzeichnet, daß das bzw. die Abzweigrohre (12) senkrecht an der Stirnwand der Käfigbatterie angebracht ist.

8. Käfigbatterie nach einem der Ansprüche 1 bis 7, dadurch gekennzeichnet, daß die Blasrohre (17) unterhalb der an der Käfigfront verlaufenden Kotabweisbleche angeordnet sind.

9. Käfigbatterie nach den Ansprüche 1 bis 8, dadurch gekennzeichnet, daß die Blasrohre (22) zwischen den Kotabweisblechen und den Futterrinnen (25) angeordnet sind.

1o. Käfigbatterie nach den Ansprüche 8 oder 9, dadurch gekennzeichnet, daß die Blasrohre (17, 22) mit ihrer nach innen gerichteten Oberfläche (19, 23) die Kotabweisfläche bilden.

11. Käfigbatterie nach den Ansprüche 1 bis 7, dadurch gekennzeichnet, daß die Blasrohre (35) im Käfigraum (28) an dessen Vorderfront unterhalb des Bodengitters des Käfigbodens (29) angeordnet sind.

12. Käfigbatterie nach den Ansprüche 1 bis 7, dadurch gekennzeichnet, daß die Blasrohre (26) an der Vorderfront der Käfigbatterie außerhalb der Käfigständer (18) angeordnet sind.

13. Käfigbatterien nach den Ansprüche 1 und 12, dadurch gekennzeichnet, daß die Austrittsdüsen (27) in den Käfigraum (28) unterhalb des jeweiligen Käfigbodens (29) geführt sind und nach schräg unten gerichtete Austrittsöffnungen (3o) haben.

14. Käfigbatterie nach den Ansprüche 5 und 12, dadurch gekennzeichnet, daß die Hilfsblasrohre (33) im Käfigraum (28) unterhalb der jeweiligen Käfigböden (29) angeordnet sind.

15. Käfigbatterie nach Anspruch 12, dqdurch gekennzeichnet, daß die Blasrohre (26) unterhalb des Eiablagebodens (32) angeordnet sind.

16. Käfigbatterie nach einem der Ansprüche 1 bis 15, dadurch gekennzeichnet, daß der Wärmetauscher durch das Hauptrohr (8) gebildet ist.

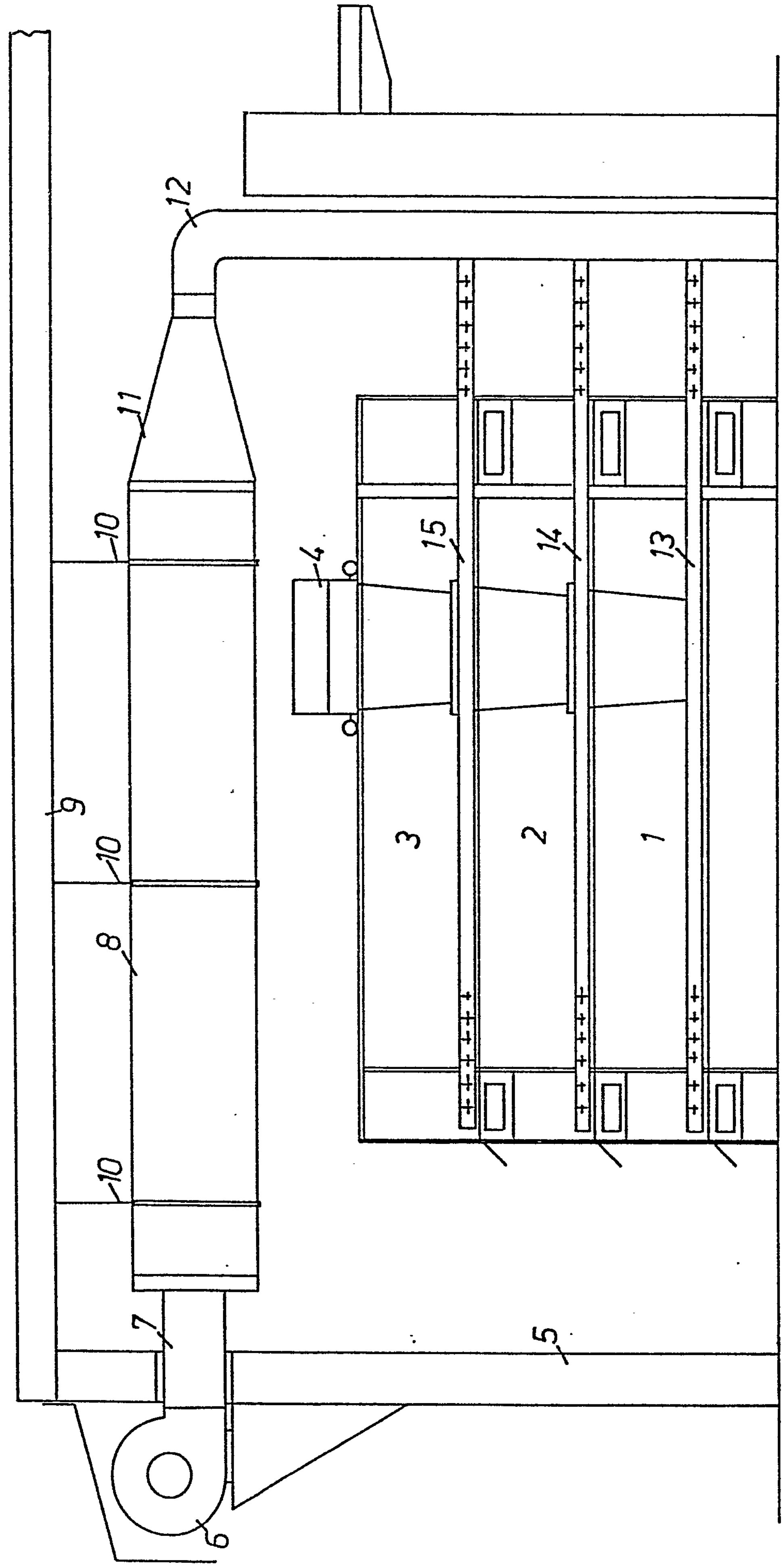


FIG. 1

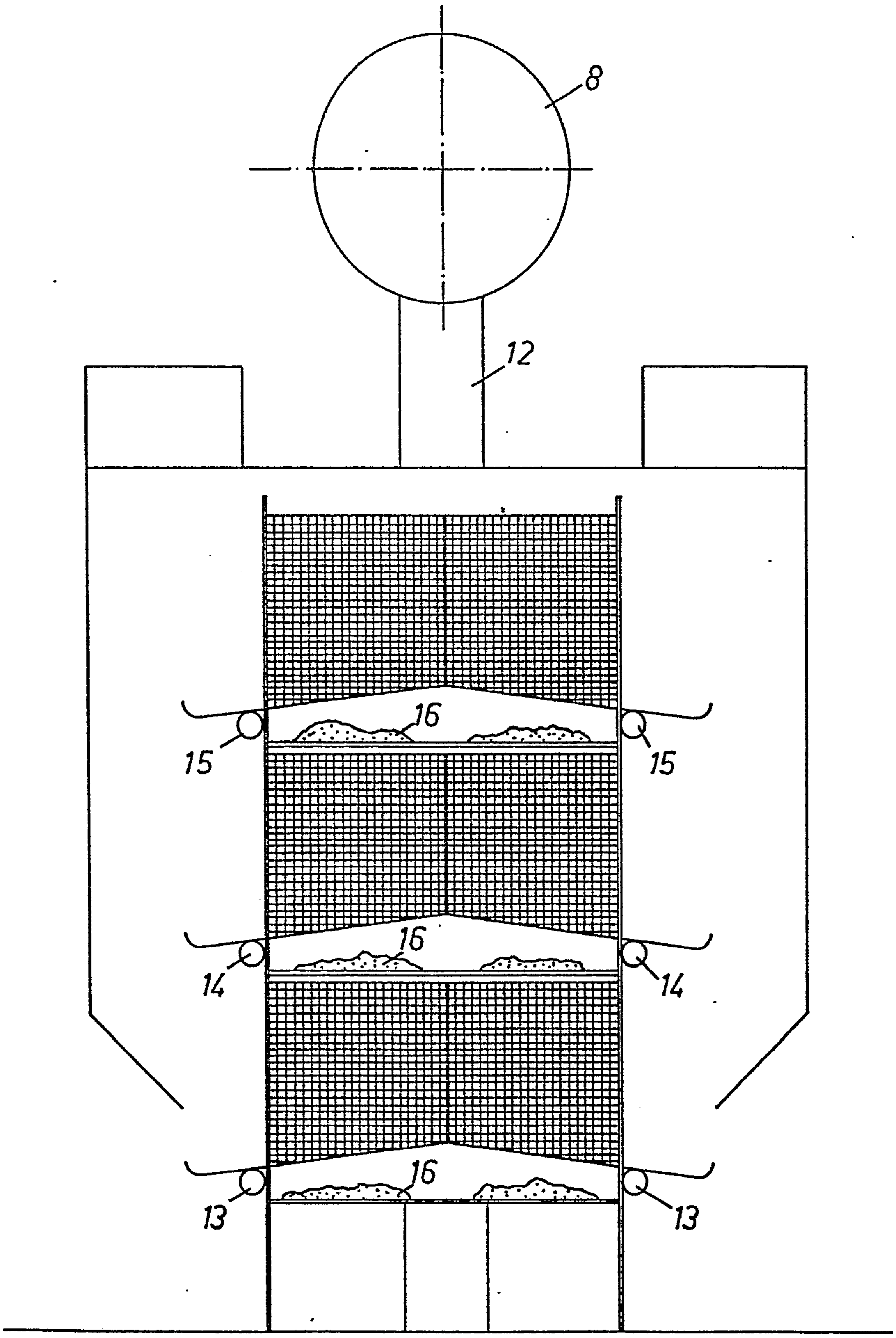


FIG. 2

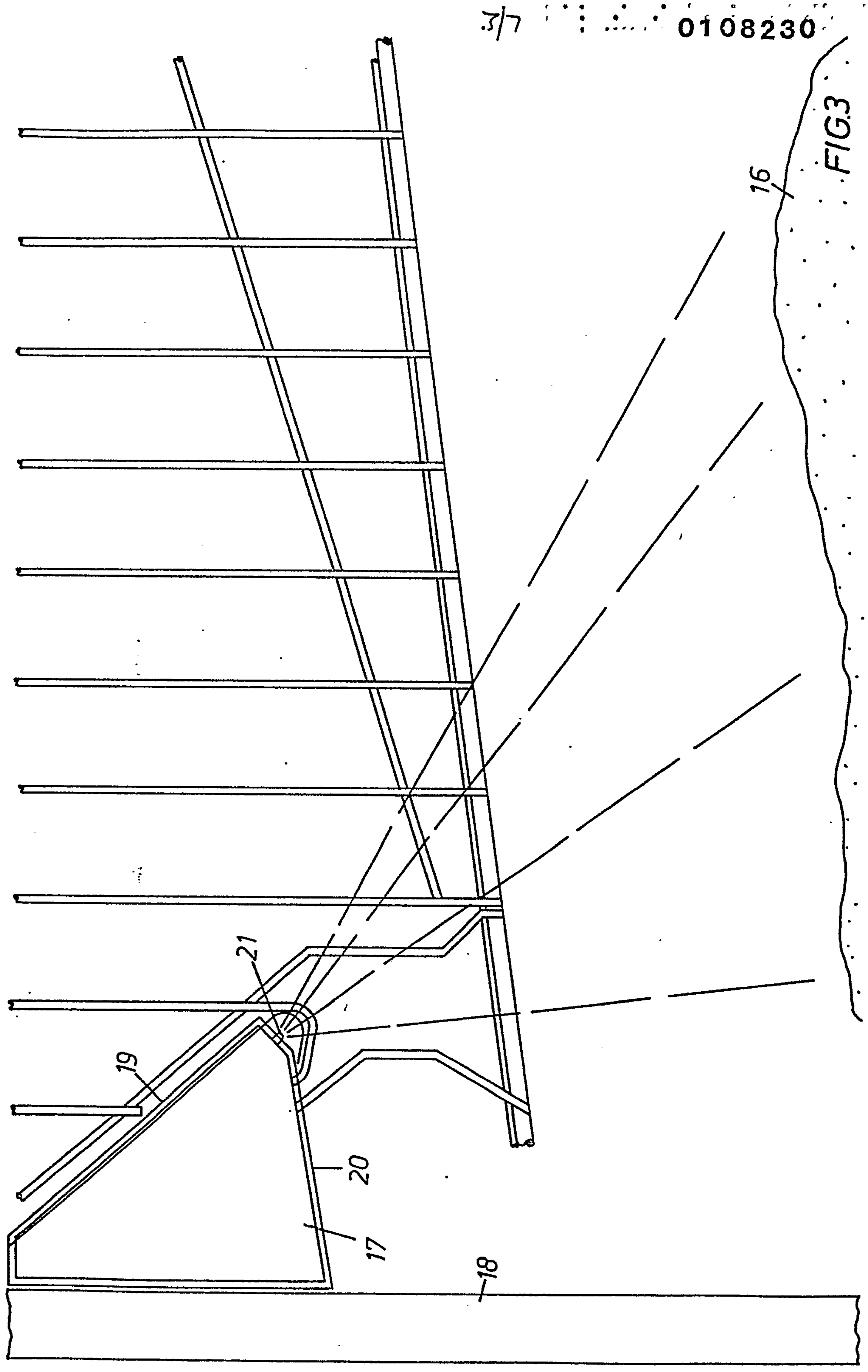


FIG3

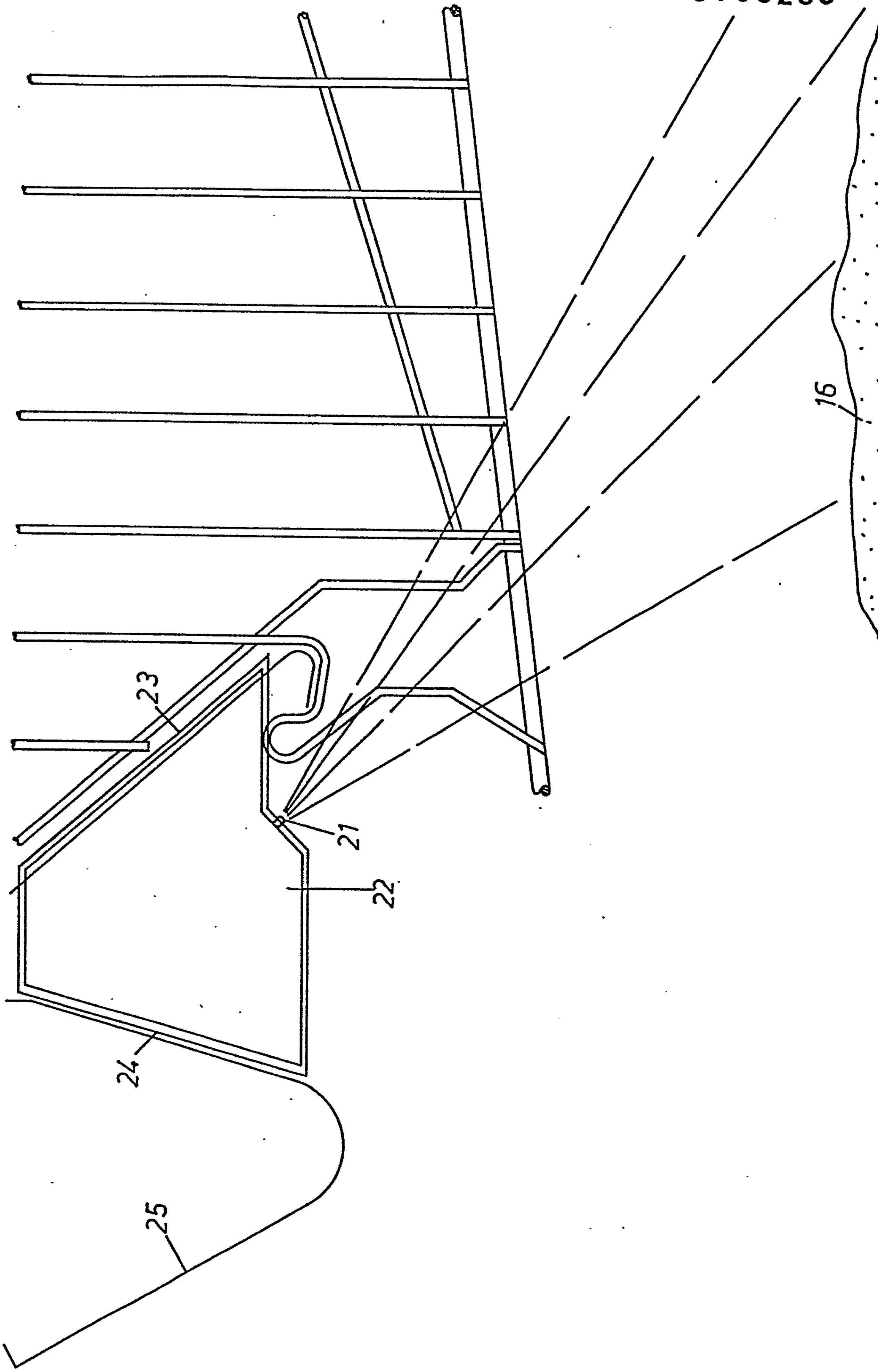


FIG. 4

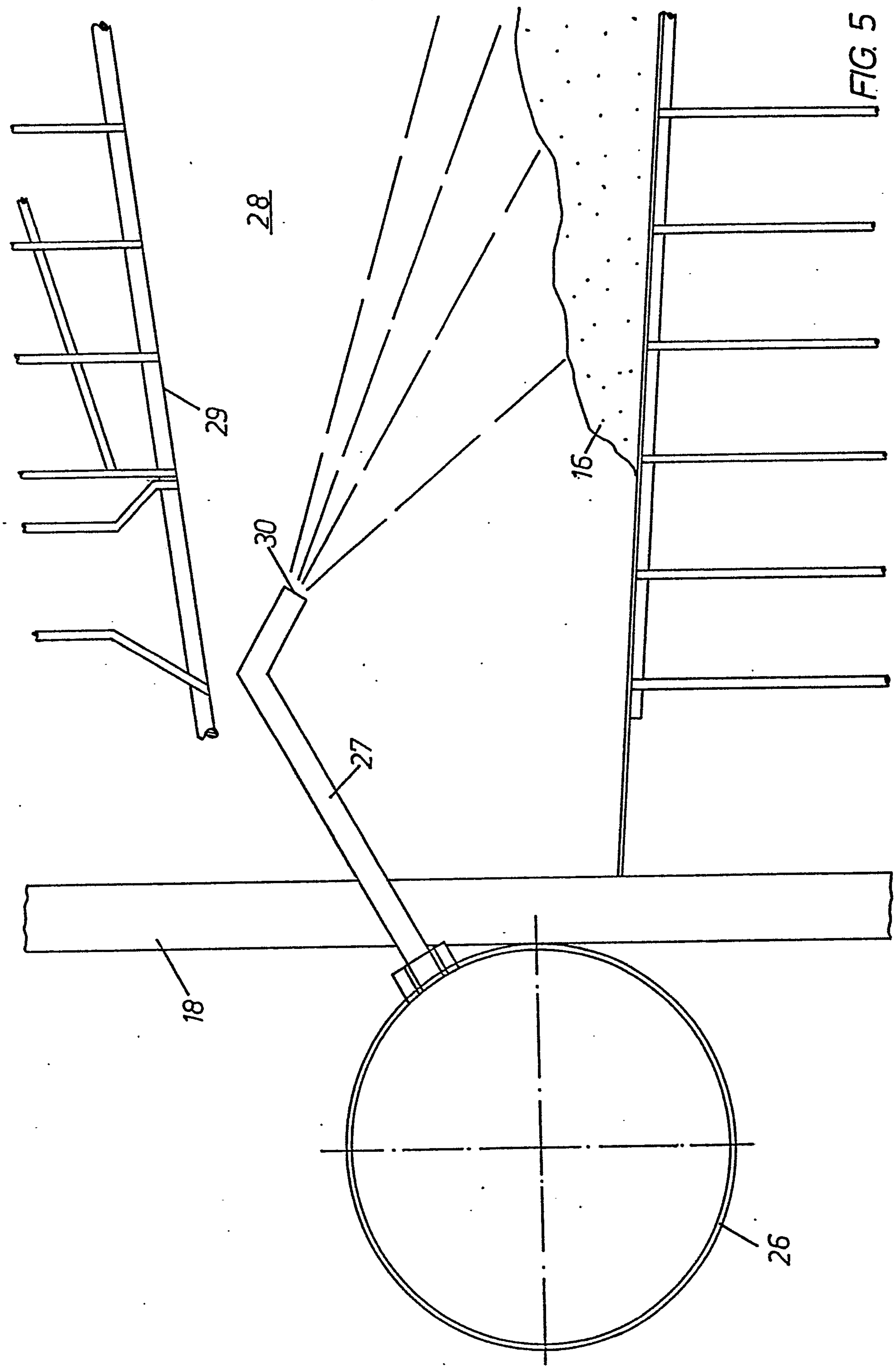


FIG. 5

0108230

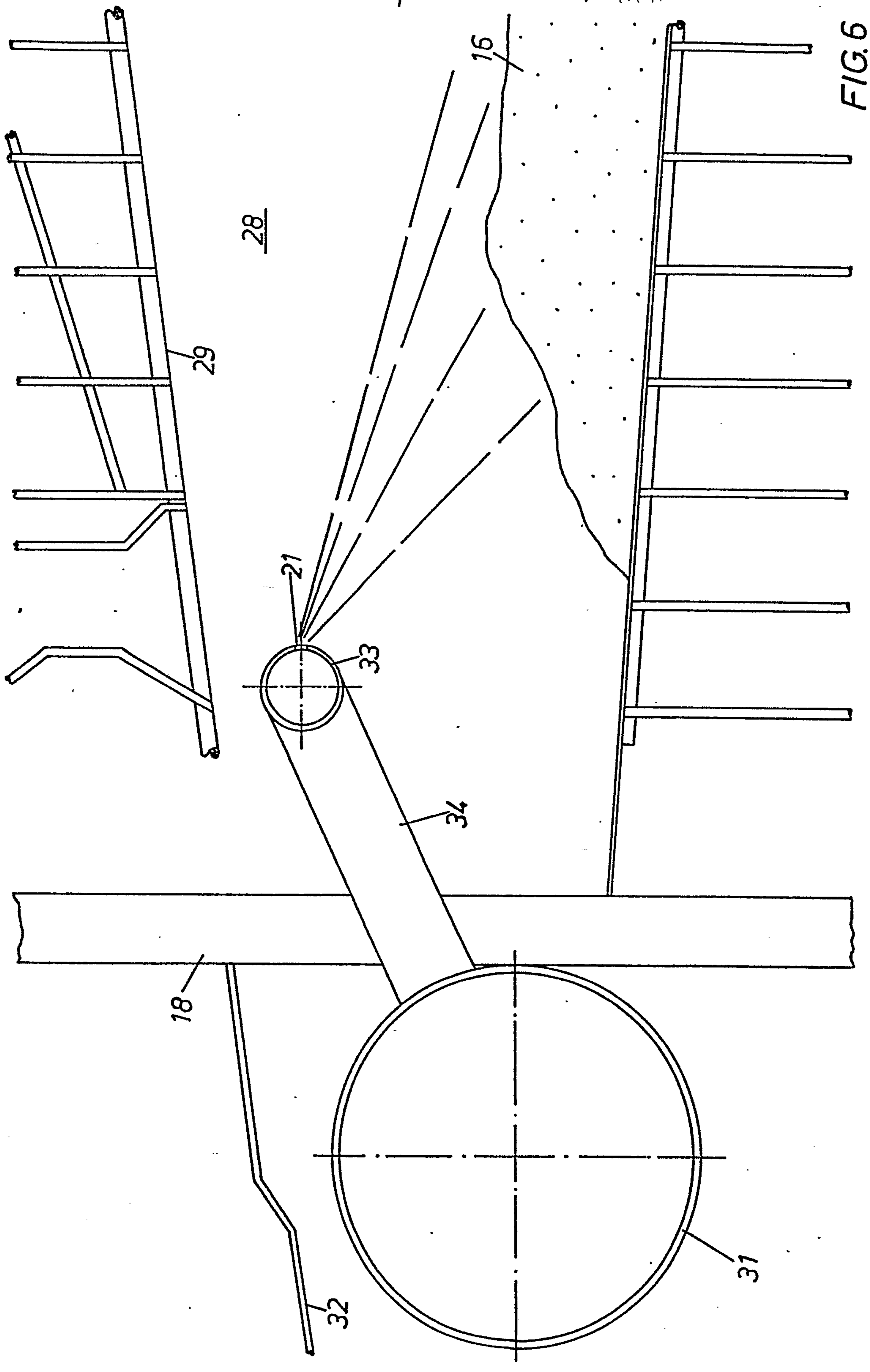


FIG.6

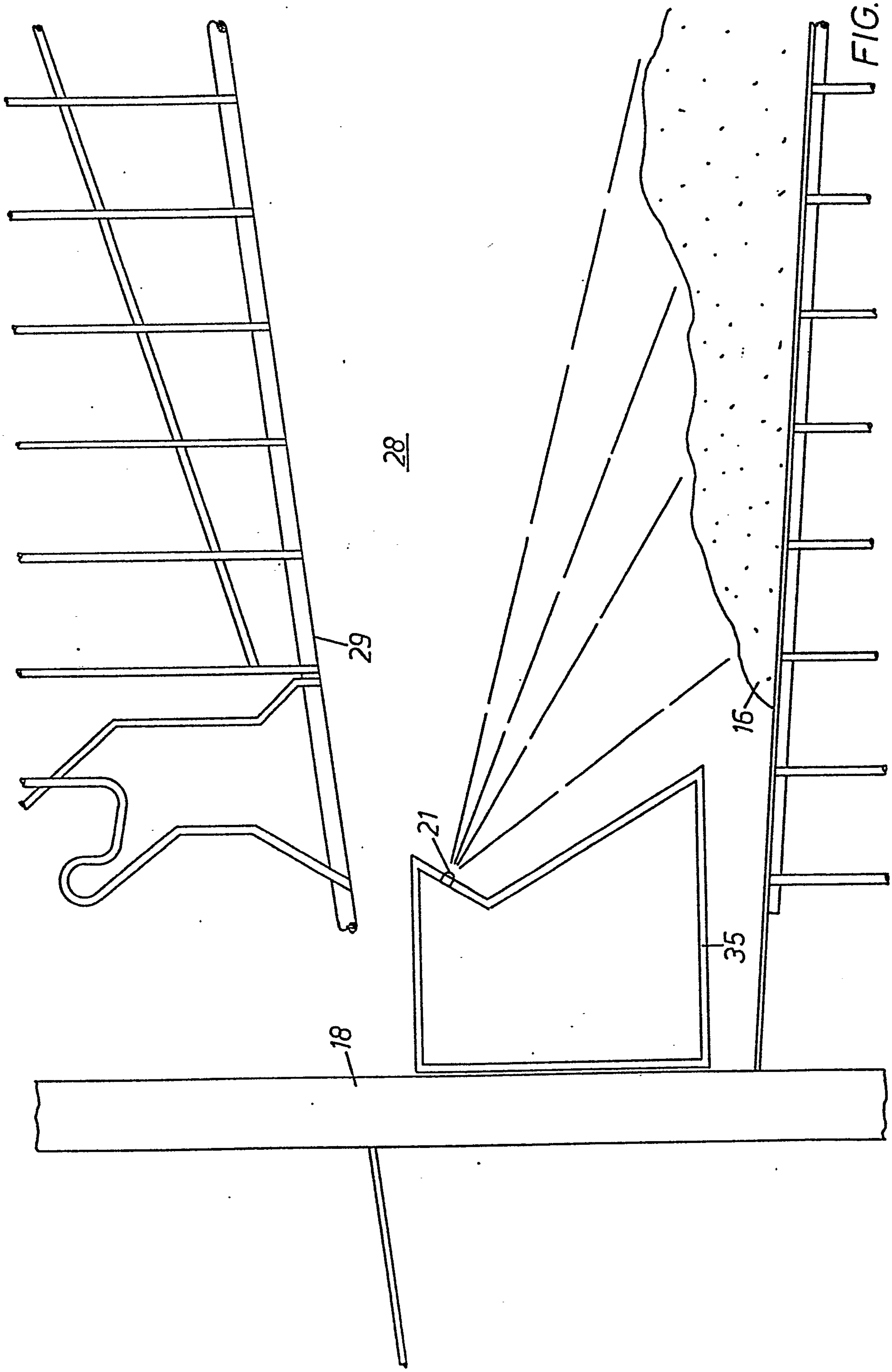


FIG.7

0108230

Europäisches Patentamt

**EUROPÄISCHER RECHERCHENBERICHT**

Nummer der Anmeldung

EP 83 10 9430

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | | | A 01 K 31/04 |
| X | DE-A-1 917 680 (WEDA)<br>* Figuren 1-3; Seiten 4-6 *<br>--- | 1,3,13 | |
| X | EP-A-0 047 043 (VAN DER VEER)<br>* Figuren 1,2,5; Seite 4, Zeile 11 - Seite 6, Zeile 31; Seite 7, Zeile 17 - Seite 8, Zeile 27 *<br>--- | 1,3,7, 8,10, 11,15 | |
| A | LANDBOUWMECHANISATIE, Band 31, Nr. 2, Februar 1980, Seiten 137-140, Wageningen, NL<br>W. KROODSMA: "Droge kippemest: ontwikkelingen en perspectieven"<br>* Figuren 3,3B *<br>----- | 1-3,7 | |
| | | | **RECHERCHIERTE SACHGEBIETE (Int. Cl. 3)** |
| | | | A 01 K |

Der vorliegende Recherchenbericht wurde für alle Patentansprüche erstellt.

| Recherchenort | Abschlußdatum der Recherche | Prüfer |
|---|---|---|
| DEN HAAG | 31-01-1984 | VILBIG K |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82